# EUROPEAN PATENT SPECIFICATION

(11) **EP 3 242 204 B1**
(45) Date of publication and mention of the grant of the patent: **28.11.2018**
(21) Application number: 17161874.7
(22) Date of filing: 20.03.2017
(51) Int. Cl.: G06F 9/451, G06F 3/0483, G06F 3/0484, H04M 1/725, G06F 9/48

(54) **METHOD AND DEVICE FOR MULTI-TASK MANAGEMENT**
VERFAHREN UND VORRICHTUNG ZUM VERWALTUNG MEHRERER ANWENDUNGEN
PROCÉDÉ ET DISPOSITIF DE GESTION D'UNE PLURALITÉ D'APPLICATIONS

(30) Priority: 05.05.2016 CN 201610294117
(43) Date of publication of application: 08.11.2017
(73) Proprietor: Beijing Xiaomi Mobile Software Co., Ltd., Beijing 100085 (CN)
(72) Inventor: ZHU, Yin, Beijing, Beijing 100085 (CN); CHEN, Qiaozhuo, Beijing, Beijing 100085 (CN); LU, Xiaochuang, Beijing, Beijing 100085 (CN); BU, Fan, Beijing, Beijing 100085 (CN); LU, Zhenzhou, Beijing, Beijing 100085 (CN); GAO, Chengxing, Beijing, Beijing 100085 (CN)
(74) Representative: dompatent von Kreisler Selting Werner - Partnerschaft von Patent- und Rechtsanwälten mbB

(56) References cited:
- CN-A- 103 105 994
- US-A1- 2011 087 982
- US-A1- 2013 174 179
- "System to preview applications and shortcuts on mobile devices", IP.COM JOURNAL, IP.COM INC., WEST HENRIETTA, NY, US, 10 November 2010 (2010-11-10), XP013141096, ISSN: 1533-0001

## Description

### FIELD

The present disclosure relates to the field of electronic equipment, and more particularly to a method and a device for multi-task management.

### BACKGROUND

Currently, electronic equipments such as smart phone, tablet computer and the like have been widely used for their operation convenience and function diversity.

Users may operate a multi-task management control to invoke a multi-task management interface when they are using an electronic equipment. Every running applications is displayed in the multi-task management interface, and every application displays the last opened preview page. If one of the applications is triggered, then the foreground of the electronic equipment runs the triggered application, and controls the application to acquiescently display its preview page in the multi-task management interface. Because the application switched to the foreground have to acquiescently display the last opened preview page, a user need to switch the pages by some associated operations in the acquiescently displayed pages if the user want to view other pages of the application, the operation procedure is complex.

Document US2011/0087982 A1 relates to a method for providing a workspace management tool that supports the switching between active applications by presenting an application switching window including one icon per application. When the selection focus pauses for a predefined time over the application icon within the application switching window, scaled down versions of all open windows become visible to the user. If the user makes a selection of an open window, then this open window is activated.

Document US 2013/0174179 A1 relates to a multitasking method and apparatus of a user device is provided for intuitively and swiftly switching between background and foreground tasks running on the user device. Upon the receiving of an interaction to request for task-switching, a stack of tasks that are currently running is displayed. A task selected from the stack is switched to foreground and an execution window of the foreground task is presented.

### SUMMARY

A method and a device for multi-task management are provided in the present disclosure. The technical solutions are as follows:
According to a first aspect of embodiments of the present disclosure, a method for multi-task management is provided, the method comprising: receiving an operation signal for triggering the display of a multi-task management interface; acquiring every running application on the electronic equipment; acquiring, for each of the running applications, cached cache pages related to the application; displaying collections of previews for the running applications in the multi-task management interface, a collection of previews for an application being used to aggregate and display cache pages related to the application; and acquiring a selected cache page, controlling an application corresponding to the selected cache page to run in the foreground, and controlling the application to initially display the selected cache page. As a user may select a cache page from collections of previews provided in the displayed multi-task management interface by inputting a predetermined operation signal for triggering the multi-task management interface, and the electronic equipment may control an application corresponding to the selected cache page to run in the foreground and control the application to initially display the selected cache page, operations for switching to a target page of the application may be simplified. The technical problem that operations for switching to a target page of the application in related technology are complex may be solved and the purpose of simplifying operations for switching to a target page of the application may be achieved.
Preferably, the number of acquired cache pages for each of the running applications is larger than one and more preferably at least four.
Preferably, the number of cache pages in the displayed collections of previews for the running applications in the multi-task management interface is equal to the number of acquired cache pages for the related application or smaller than the number of acquired cache pages for the related application.

Alternatively, the displaying collections of previews for the running applications in the multi-task management interface comprises: presenting, for a collection of previews for every application, cache pages related to the application in a superposition manner according to a first predetermined order; or presenting, for a collection of previews for every application, a predetermined number of cache pages related to the application in a superposition manner according to a second predetermined order; wherein at least part of the area of any cache page in every collection of previews is not covered by other cache pages in the collection of previews.

Alternatively, presenting every cache page in one collection of previews in an extension way when detecting that the collection of previews is selected, to enable the user to be able to browse every cache page contained in the collection of previews.

Alternatively, the method further comprising: receiving a switch signal triggered for a designated collection of previews, the switch signal being used to indicate to switch a cache page presented on a top layer; controlling a first cache page presented on the top layer of the designated collection of previews to switch to be presented on a bottom layer of the designated collection of previews, switching a second cache page behind the first cache page to be presented on the top layer of the designated collection of previews in order; to enable the user to be able to switch the cache page presented on the top layer of the collection of previews, and browse contents of every cache page in the collection of previews.

Alternatively, the controlling of an application corresponding to the selected cache page to run in the foreground comprises: controlling an application corresponding to the selected cache page to run in the foreground if the selected cache page is on a top layer of the collection of previews in which the selected cache page is located.

Alternatively, the method further comprising: after acquiring a selected cache page, controlling the selected cache page to be presented on a top layer of a collection of previews in which the selected cache page is located if the selected cache page is not on the top layer of the collection of previews in which the selected cache page is located, to enable the user to switch the cache page presented on the top layer of the collection of previews, that is, the user may switch other caches page that are not on the top layer of the collection of previews to be presented on the top layer of the collection of previews.

Alternatively, the method further comprising: after an application is started, caching pages that the application opens during this startup, and considering the pages as cache pages related to the application. By, after an application is started, caching pages that the application opens during this startup, these pages may be considered as cache pages related to the application, such that cache pages related to every running application may be acquired directly when the multi-task management interface is evoked subsequently to display.

Alternatively, the method further comprising: clearing cached cache pages related to an application when the application stops running. By clearing cached cache pages related to an application when the application stops, the system resources may be released from the cache pages.

According to a second aspect of embodiments of the present disclosure, a device applied in an electronic equipment for multi-task management is provided, the device comprising: a first receiving module configured to receive an operation signal for triggering the display of a multi-task management interface; a first acquiring module configured to acquire every running application on the electronic equipment; a second acquiring module configured to acquire, for each of the running applications, cached cache pages related to the application; a displaying module configured to display collections of previews for the running applications in the multi-task management interface, a collection of previews for an application being used to aggregate and display cache pages related to the application; and a first controlling module configured to acquire a selected cache page, control an application corresponding to the selected cache page to run in the foreground, and control the application to initially display the selected cache page.
Preferably, the number of acquired cache pages for each of the running applications is larger than one and more preferably at least four.
Preferably, the number of cache pages in the displayed collections of previews for the running applications in the multi-task management interface is equal to the number of acquired cache pages for the related application or smaller than the number of acquired cache pages for the related application.

Alternatively, the display module comprises: a first presenting sub-module configured to present, for a collection of previews for every application, cache pages related to the application in a superposition manner according to a first predetermined order; or a second presenting sub-module configured to present, for a collection of previews for every application, a predetermined number of cache pages related to the application in a superposition manner according to a second predetermined order; wherein at least part of the area of any cache page in every collection of previews is not covered by other cache pages in the collection of previews.

Alternatively, the device further comprising: a presenting module configured to present every cache page in one collection of previews in an extension way when detecting that the collection of previews is selected.

Alternatively, the device further comprising: a second receiving module configured to receive a switch signal triggered for a designated collection of previews, the switch signal being used to indicate to switch a cache page presented on a top layer; a second controlling module configured to control a first cache page presented on the top layer of the designated collection of previews to switch to be presented on a bottom layer of the designated collection of previews, switch a second cache page behind the first cache page to be presented on the top layer of the designated collection of previews in order.

Alternatively, the first controlling module is further configured to control an application corresponding to the selected cache page to run in the foreground if the selected cache page is on a top layer of the collection of previews in which the selected cache page is located.

Alternatively, the device further comprising: a third controlling module configured to, after acquiring a selected cache page, control the selected cache page to be presented on a top layer of a collection of previews in which the selected cache page is located if the selected cache page is not on the top layer of the collection of previews in which the selected cache page is located.

Alternatively, the device further comprising: a caching module configured to, after an application is started, cache pages that the application opens during this startup, and consider the pages as cache pages related to the application.

Alternatively, the device further comprising: a clearing module configured to clear cached cache pages related to an application when the application stops running.

According to a third aspect of embodiments of the present disclosure, a device applied in an electronic equipment for multi-task management is provided, the device comprising: a processor; a memory for storing processor-executable instructions; wherein the processor is configured to: receive an operation signal for triggering the display of a multi-task management interface; acquire every running application on the electronic equipment; acquire, for each of the running applications, cached cache pages related to the application; display collections of previews for the running applications in the multi-task management interface, a collection of previews for an application being used to aggregate and display cache pages related to the application; and acquire a selected cache page, control an application corresponding to the selected cache page to run in the foreground, and control the application to initially display the selected cache page.
Preferably, the number of acquired cache pages for each of the running applications is larger than one and more preferably at least four.
Preferably, the number of cache pages in the displayed collections of previews for the running applications in the multi-task management interface is equal to the number of acquired cache pages for the related application or smaller than the number of acquired cache pages for the related application.

It is to be understood that the forgoing general description and the following detailed description are exemplary only, and are not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart of a method for multi-task management illustrated according to an exemplary embodiment;
Fig. 2A is a flow chart of a method for multi-task management illustrated according to another exemplary embodiment;
Fig. 2B is a schematic diagram of triggering the display of a multi-task management interface illustrated according to an exemplary embodiment;
Fig. 2C is a schematic diagram of presenting a collection of previews for applications in a multi-task management interface illustrated according to an exemplary embodiment;
Fig. 2D is a schematic diagram of another presenting a collection of previews for applications in a multi-task management interface illustrated according to an exemplary embodiment;
Fig. 2E is a schematic diagram of presenting every cache page in an extension way in a collection of previews illustrated according to an exemplary embodiment;
Fig. 2F is a schematic diagram of another presenting every cache page in an extension way in a collection of previews illustrated according to an exemplary embodiment;
Fig. 2G is a flow chart of a method for switching a cache page presented on the top layer of a collection of previews illustrated according to an exemplary embodiment;
Fig. 2H is a schematic diagram of switching a cache page presented on the top layer of a collection of previews illustrated according to an exemplary embodiment;
Fig. 2I is a schematic diagram of another switching a cache page presented on the top layer of a collection of previews illustrated according to an exemplary embodiment;
Fig. 3 is a block diagram of a device for multi-task management illustrated according to an exemplary embodiment;
Fig. 4 is a block diagram of a device for multi-task management illustrated according to another exemplary embodiment;
Fig. 5 is a block diagram of a device for managing multi-task illustrated according to an exemplary embodiment.

### DETAILED DESCRIPTION

Exemplary embodiments will now be illustrated in detail, examples of which are illustrated in the accompanying drawings. When the following description refers to the accompanying drawings, the same numbers in different drawings represent the same or similar elements, unless otherwise described. The implementations described in the following exemplary embodiments do not represent all of the implementations consistent with the present disclosure. Instead, they are only examples of devices and methods consistent with aspects of the present disclosure as recited in the appended claims.

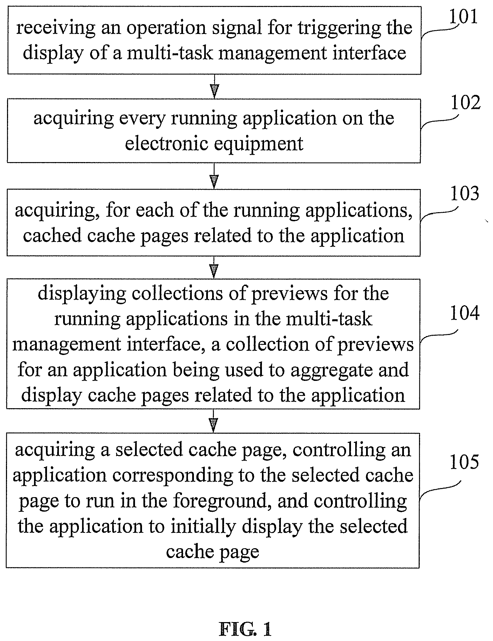

Fig. 1 is a flow chart of a method for multi-task management illustrated according to an exemplary embodiment. This multi-task management method may be applied in an electronic equipment with a touch screen, and may comprise the following several steps.

In step 101, an operation signal for triggering the display of a multi-task management interface may be received.

In step 102, every running application on the electronic equipment may be acquired.

In step 103, for each of the running applications, cached cache pages related to the application may be acquired. Preferably, the number of acquired cache pages for each of the running applications is larger than one and more preferably at least four.

In step 104, collections of previews for the running applications may be displayed in the multi-task management interface, a collection of previews for an application may be used to aggregate and display cache pages related to the application. Preferably, the number of cache pages in the displayed collections of previews for the running applications in the multi-task management interface is equal to the number of acquired cache pages for the related application or smaller than the number of acquired cache pages for the related application.

In step 105, a selected cache page may be acquired, an application corresponding to the selected cache page may be controlled to run in the foreground, and the application may be controlled to initially display the selected cache page.

As above described, a method for multi-task management is provided in embodiments of the present disclosure, by receiving an operation signal for triggering the display of a multi-task management interface, for each of the running applications, cached cache pages related to the application may be acquired. Collections of previews for the running applications may be displayed in the multi-task management interface, and a collection of previews for an application may be used to aggregate and display cache pages related to the application. A selected cache page may be acquired, an application corresponding to the selected cache page may be controlled to run in the foreground, and the application may be controlled to initially display the selected cache page. As a user may select a cache page from collections of previews provided in a displayed multi-task management interface by inputting a predetermined operation signal for triggering the multi-task management interface, and the electronic equipment may control an application corresponding to the selected cache page to run in the foreground and control the application to initially display the selected cache page, operations for switching to a target page of the application may be simplified, the technical problem that operations for switching to a target page of the application in related technology are complex may be solved and the purpose of simplifying operations for switching to a target page of the application may be achieved.

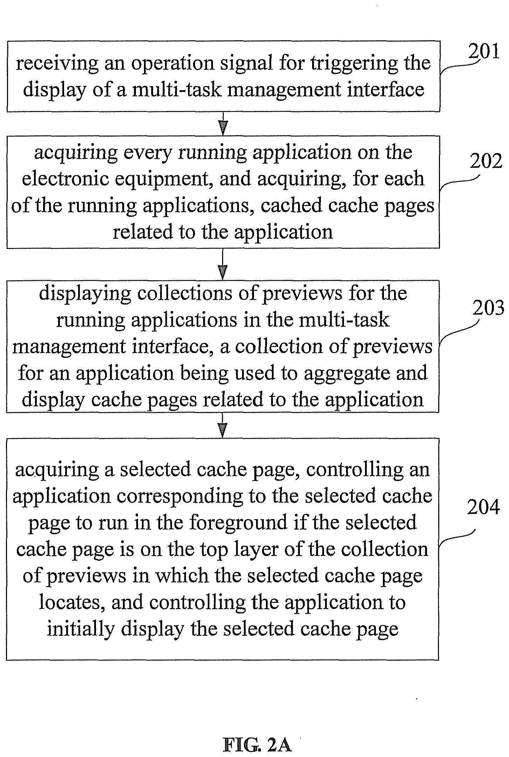

Fig. 2A is a flow chart of a method for multi-task management illustrated according to another exemplary embodiment. This multi-task management method may be applied in an electronic equipment with a touch screen, and may comprise the following several steps.

In step 201, an operation signal for triggering the display of a multi-task management interface may be received.

The operation signal discussed here may be generated when some physical button on the electronic equipment is triggered, may also be a gesture inputted by the user on the touch screen of the electronic equipment, and may also be generated when the electronic equipment is shaken in a predetermined trajectory. The operation signal is not limited in the present embodiment, which may be determined according to the actual situation.

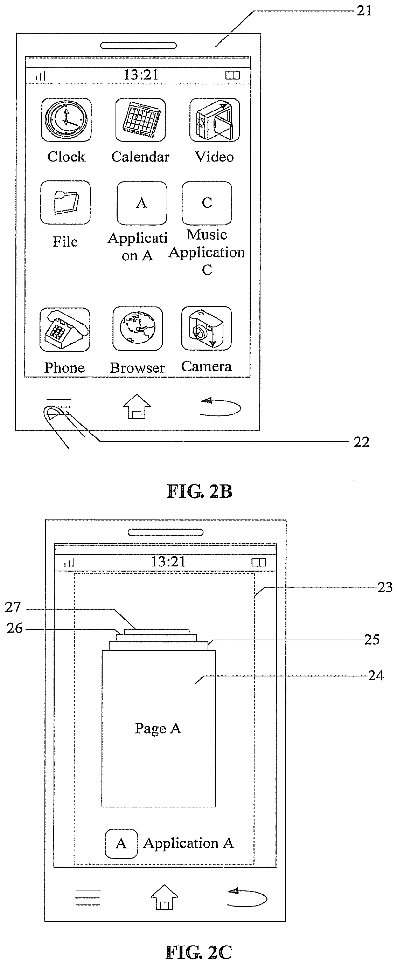

The present embodiment may take the operation signal generated when some physical button on the electronic equipment is triggered as an example, as shown in Fig. 2B, the electronic equipment 21 may comprise a multi-task button 22 which may be used to trigger the display of a multi-task management interface. When the user clicks the multi-task button 22, an operation signal for triggering the display of a multi-task management interface may be received.

The multi-task management interface may be generally used to display every running application. In the present embodiment, when every application is displayed in the multi-task management interface, the application may be displayed in a form of a collection of previews for this application, and the collection of previews for this application may be used to aggregate cache pages associated with this application.

In step 202, every running application on the electronic equipment may be acquired, and for each of the running applications, cached cache pages related to the application may be acquired.

The cache pages associated with the application discussed here may be acquired by, after the application is started, caching pages that the application opens during this startup. For example, after an application A is started, the user may open page A, page B, page C and page D successively in the application A. Accordingly, the electronic equipment may cache the page A, page B, page C and page D respectively, and consider these pages as cache pages associated with this application.

Thus, after the operation signal for triggering the display of the multi-task management interface is received, for every running application, cache pages associated with this application may be acquired directly.

In step 203, collections of previews for the running applications may be displayed in the multi-task management interface, and a collection of previews for an application may be used to aggregate and display cache pages related to the application.

Alternatively, this step may be realized by the following two possible implementations:
In a first possible implementation, for a collection of previews for each application, cache pages related to the application may be presented in a superposition manner according to a first predetermined order, wherein at least part of the area of any cache page in each collection of previews is not covered by other cache pages in the collection of previews.

Generally, the first predetermined order may be the sequential order that the cache pages being opened. Preferably, the first predetermined order may also be the order of the frequency that the cache pages being opened (from high to low). This is not limited in the present embodiment, which may be determined according to the actual situation.

When presenting cache pages related to the application in a superposition manner, the first cache page according to the first predetermined order may be presented on the top layer, the second cache page according to the first predetermined order may be presented on the second layer, and so on.

Taking the multi-task management interface presenting a collection of previews for the application A as an example, as shown in Fig. 2C, it may be acquired that cache pages associated with the application A are page A, page B, page C and page D. When the preview interface 23 of the application A presents a collection of previews, the page A 24, page B 25, page C 26 and page D 27 may be presented in a superposition manner according to the sequential order that the cache pages being opened, and at least part of the area of any cache page in the collection of previews is not covered by other cache pages in the collection of previews.

In a second possible implementation, for a collection of previews for every application, a predetermined number of cache pages related to the application may be presented in a superposition manner according to a second predetermined order, wherein at least part of the area of any cache page in each collection of previews is not covered by other cache pages in the collection of previews.

Generally, the second predetermined order may be the sequential order that the cache pages being opened. Preferably, the second predetermined order may also be the order of the frequency that the cache pages being opened (from high to low). This is not limited in the present embodiment, which may be determined according to the actual situation.

When presenting cache pages related to the application in a superposition manner, the first cache page according to the second predetermined order may be presented on the top layer, the second cache page according to the second predetermined order may be presented on the second layer, and so on.

The predetermined number of cache pages displayed in the collection of previews may be set by the user, or may be system default. For example, the system default predetermined number of cache pages presented in the predetermined collection of applications may be two, then cache pages associated with the application may be ordered according to the second predetermined order, and the top two cache pages may be presented in the collection of previews in a superposition manner according to the second predetermined order.

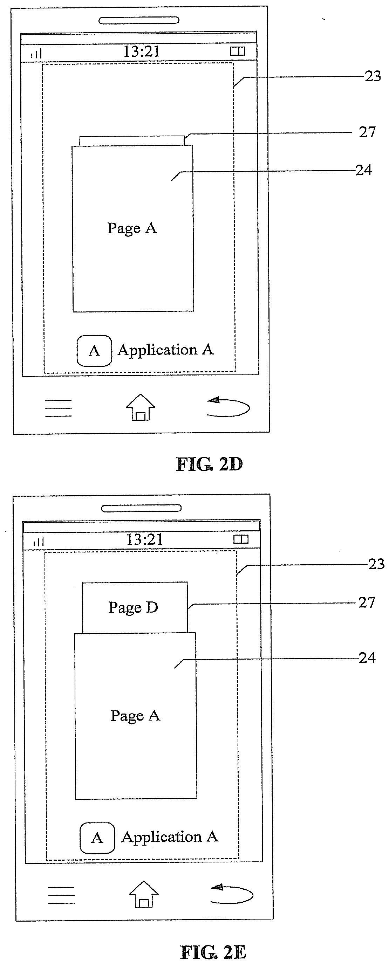

For example, it may be acquired that cache pages associated with the application A are page A, page B, page C and page D, and the system acquiescently present only two cache pages in a collection of previews. The page A, page B, page C and page D may be ordered according to the cache page open frequency (from high to low), wherein the open frequency of the page A may be the highest, and followed by the page D. As shown in Fig. 2D, the page A 24 and page D 27 may be presented in the collection of previews for the application A in a superposition manner with the page A 24 being presented on the top layer of the collection of previews, while the page A 24 is not covered by the page D 27, and a part of area of the page D 27 is not covered by the page A 24.

Alternatively, in order to make the user to be able to better browse every cache page in a collection of previews, when it is detected that a collection of previews is selected, every cache page in this collection of previews may be presented in an extension way.

There may be many ways for the presenting in extension ways. For example, cache pages in the collection of previews may be tiled in the preview interface for presenting; moreover, the cache pages presented in a superposition manner may be stretched vertically for presenting, so as to reduce the covered area of cache pages that are not on the top layer.

For example, still referring to Fig. 2D which is a schematic diagram of presenting the page A 24 and page D 27 in the collection of previews for the application A in a superposition manner, when the electronic equipment detects that this collection of previews is selected, then the cache pages presented in a superposition manner may be stretched vertically for presenting, shown as Fig. 2E.

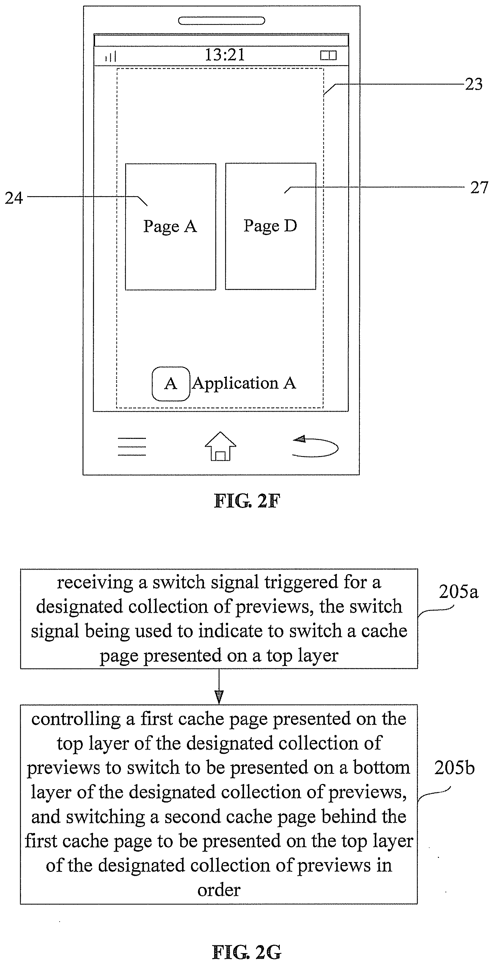

For example, still referring to Fig. 2D which is a schematic diagram of presenting the page A 24 and page D 27 in the collection of previews for the application A in a superposition manner. As shown in Fig. 2F, when the electronic equipment detects that this collection of previews is selected, then the page A 24 and page D 27 in this collection of previews may be tiled in the preview interface 23 for presenting.

In step 204, a selected cache page may be acquired, if the selected cache page is on a top layer of the collection of previews in which the selected cache page is located, an application corresponding to the selected cache page may be controlled to run in the foreground, and the application may be controlled to initially display the selected cache page.

For example, still referring to Fig. 2E, the user may click the top layer cache page A of the collection of previews for the application A, and then the application A may be controlled to be displayed in the foreground and to display the page A.

It should be noted that, in the present embodiment, when collections of previews for the every running application are displayed in the multi-task management interface, every collection of previews may be displayed horizontally in a single row in the multi-task management interface according to a third predetermined order. Generally, a display screen may only present a limited number of collections of previews, and the user may trigger the presentation of more collections of previews by inputting a predetermined gesture if the user wants to acquire more collection of previews. For example, the running applications may include application A and application B, still referring to the collection of previews presenting the application A in Fig. 2B. If the user wants to view collections of previews for more applications, the user may trigger the display of the collection of previews for the application B by inputting a right slide gesture.

However, examples in the present embodiment do not limit the way the multi-task management interface displays collections of previews for every running application. In practical applications, when every collection of previews is displayed in the multi-task management interface, every collection of previews for the applications may be also displayed horizontally in dual rows according to the third predetermined order. The third predetermined order may be the order the applications being opened recently, or the order of the open frequency of applications (from high to low).

As above described, a method for multi-task management is provided in embodiments of the present disclosure, by receiving an operation signal for triggering the display of a multi-task management interface, for each of the running applications, cached cache pages related to the application may be acquired. Collections of previews for the running applications may be displayed in the multi-task management interface, and a collection of previews for an application may be used to aggregate and display cache pages related to the application. A selected cache page may be acquired, an application corresponding to the selected cache page may be controlled to run in the foreground, and the application may be controlled to initially display the selected cache page. As a user may select a cache page from collections of previews provided in a displayed multi-task management interface by inputting a predetermined operation signal for triggering the multi-task management interface, and the electronic equipment may control an application corresponding to the selected cache page to run in the foreground and control the application to initially display the selected cache page, operations for switching to a target page of the application may be simplified, the technical problem that operations for switching to a target page of the application in related technology are complex may be solved and the purpose of simplifying operations for switching to a target page of the application may be achieved.

Moreover, after acquiring a selected cache page, by controlling the selected cache page to be presented on a top layer of a collection of previews in which the selected cache page is located if the selected cache page is not on the top layer of the collection of previews in which the selected cache page is located, to enable the user to be able to switch the cache page presented on the top layer of the collection of previews, that is, the user may switch other caches page that are not on the top layer of the collection of previews to be presented on the top layer of the collection of previews.

Moreover, after an application is started, by caching pages that the application opens during this startup, the pages may be considered as cache pages related to the application. By, after an application is started, caching pages that the application opens during this startup, these pages may be considered as cache pages related to the application, such that cache pages related to every running application may be acquired directly when the multi-task management interface is evoked subsequently to display.

Moreover, presenting every cache page in one collection of previews in an extension way when detecting that the collection of previews is selected, to enable the user to be able to browse every cache page contained in the collection of previews.

Alternatively, when cache pages in the collection of previews are presented in the multi-task management interface, the user may also switch the cache page presented on the top layer of the collection of previews. Specifically, the switching of the cache page presented on the top layer of the collection of previews may be implemented by the several sub-steps shown in Fig. 2G.

In step 205a, a switch signal triggered for a designated collection of previews may be acquired, and the switch signal may be used to indicate to switch a cache page presented on a top layer.

The switch signal discussed here may generally be gestures inputted by the user on the touch screen of the electronic equipment. For example, the switch signal may be an up slide operation gesture, or a down slide operation gesture. This is not limited in the present embodiment, which may be determined by the actual situation.

In step 205b, a first cache page presented on the top layer of the designated collection of previews may be controlled to switch to be presented on a bottom layer of the designated collection of previews, and a second cache page behind the first cache page may be switched to be presented on the top layer of the designated collection of previews in order.

The first cache page discussed here may generally be the cache page presented on the top layer of the collection of previews, and the second cache page may be the cache page presented on the next layer of the first cache page (i.e., the second layer of the collection of previews), and so on. The designated collection of previews discussed here may generally be designated by the user, i.e., the collection of previews selected by the user may be the designated collection, and the top layer cache page of the collection of previews designated by the user may need to be switched.

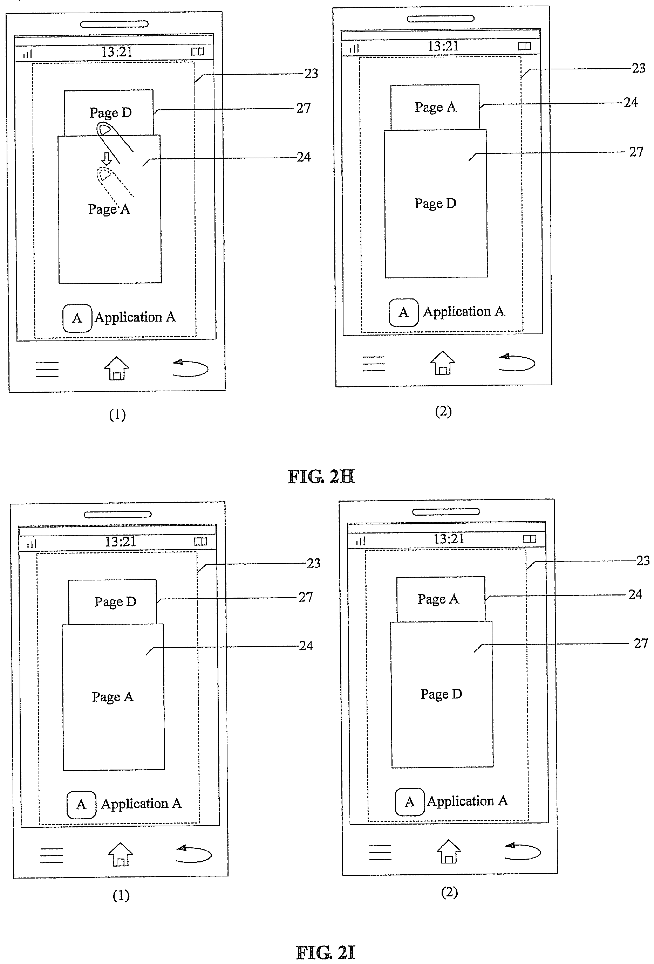

For example, as shown in Fig. 2H(1), the user may input a down slide gesture for switching the cache page presented on the top layer in the collection of previews for the application A. Accordingly, the electronic equipment may receive a switch signal triggered for the collection of previews for the application A, as shown in Fig. 2H(2), the first cache page (page A 24) of this collection of previews may be controlled to be presented on the bottom layer of this collection of previews, and the second cache page (page D 27) ordered behind the first cache page may be switched to be presented on the top layer of this designated collection of previews.

Alternatively, after a selected cache page is acquired, the selected cache page may be controlled to be presented on the top layer of a collection of previews in which the selected cache page locates if the selected cache page is not on the top layer of the collection of previews in which the selected cache page locates

For example, as shown in Fig. 2I(1), the page A 24 and page D 27 may be presented in an extension way in the collection of previews for the application A, while the page A 24 may be on the top layer of this collection of previews, and the page D 27 may be on the bottom layer of this collection of previews. When the user clicks the page D 27, as shown in Fig. 2I(2), the electronic equipment may control the page D 27 to be presented on the top layer of this collection of previews.

Alternatively, when the application stops running, the cached cache pages associated with this application may be cleared.

Alternatively, when the application is a browser, webpage tabs opened in the browser application may also be aggregated into collections of previews for this browser application.

The following are device embodiments of the present disclosure, which may be used to perform method embodiments of the present disclosure. Details not disclosed in device embodiments of the present disclosure may refer to method embodiments of the present disclosure.

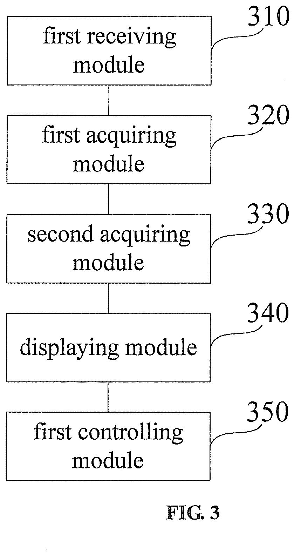

Fig. 3 is a block diagram of a device for multi-task management illustrated according to an exemplary embodiment, which may be applied in an electronic equipment with a touch screen. This device for multi-task management may comprise: a first receiving module 310, a first acquiring module 320, a second acquiring module 330, a displaying module 340 and a first controlling module 350.

The first receiving module 310 may be configured to a first receiving module configured to receive an operation signal for triggering the display of a multi-task management interface.

The first acquiring module 320 may be configured to acquire every running application on the electronic equipment.

The second acquiring module 330 may be configured to acquire, for each of the running applications, cached cache pages related to the application, wherein the number of acquired cache pages for each application is preferably larger than one and more preferably at least four..

The displaying module 340 may be configured to display collections of previews for the running applications in the multi-task management interface, and a collection of previews for an application may be used to aggregate and display cache pages related to the application, wherein the number of displayed cache pages for each application is preferably equal to or smaller than the number of acquired cache pages.

The first controlling module 350 may be configured to acquire a selected cache page, control an application corresponding to the selected cache page to run in the foreground, and control the application to initially display the selected cache page.

As above described, a device for multi-task management is provided in embodiments of the present disclosure, by receiving an operation signal for triggering the display of a multi-task management interface, for each of the running applications, cached cache pages related to the application may be acquired. Collections of previews for the running applications may be displayed in the multi-task management interface, and a collection of previews for an application may be used to aggregate and display cache pages related to the application. A selected cache page may be acquired, an application corresponding to the selected cache page may be controlled to run in the foreground, and the application may be controlled to initially display the selected cache page. As a user may select a cache page from collections of previews provided in a displayed multi-task management interface by inputting a predetermined operation signal for triggering the multi-task management interface, and the electronic equipment may control an application corresponding to the selected cache page to run in the foreground and control the application to initially display the selected cache page, operations for switching to a target page of the application may be simplified, the technical problem that operations for switching to a target page of the application in related technology are complex may be solved and the purpose of simplifying operations for switching to a target page of the application may be achieved.

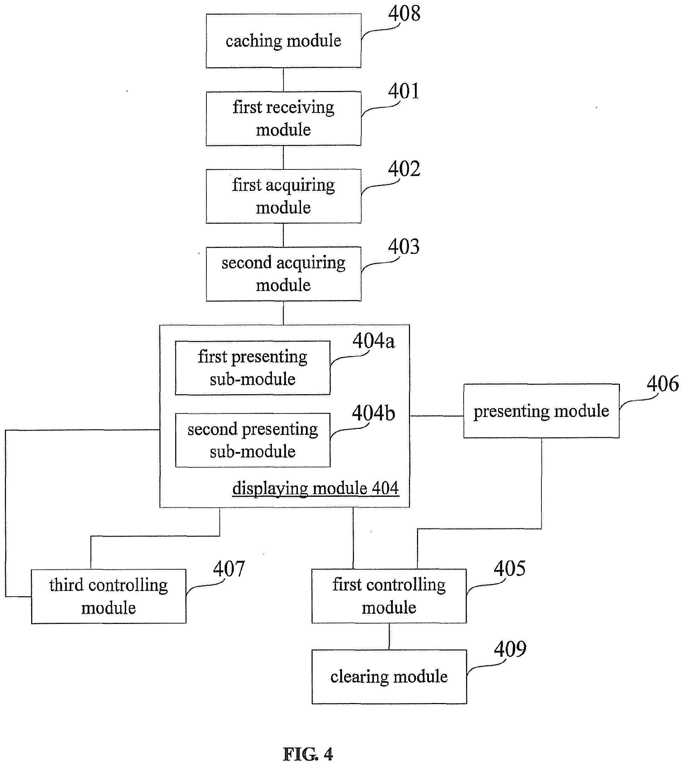

Fig. 4 is a block diagram of a device for multi-task management illustrated according to another exemplary embodiment, which may be applied in an electronic equipment with a touch screen. This device for multi-task management may comprise: a first receiving module 401, a first acquiring module 402, a second acquiring module 403, a displaying module 404 and a first controlling module 405.

The first receiving module 401 may be configured to receive an operation signal for triggering the display of a multi-task management interface.

The operation signal discussed here may be generated when some physical button on the electronic equipment is triggered, may also be a gesture inputted by the user on the touch screen of the electronic equipment, and may also be generated when the electronic equipment is shaken in a predetermined trajectory. The operation signal is not limited in the present embodiment, which may be determined according to the actual situation.

The multi-task management interface may be generally used to display every running application. In the present embodiment, when every application is displayed in the multi-task management interface, the application may be displayed in a form of a collection of previews for this application, and the collection of previews for this application may be used to aggregate cache pages associated with this application.

The first acquiring module 402 may be configured to acquire every running application on the electronic equipment.

The second acquiring module 403 may be configured to acquire, for each of the running applications, cached cache pages related to the application.

The cache pages associated with the application discussed here may be acquired by, after the application is started, caching pages that the application opens during this startup. Thus, after the operation signal for triggering the display of the multi-task management interface is received, for every running application, cache pages associated with this application may be acquired directly.

The displaying module 404 may be configured to display collections of previews for the running applications in the multi-task management interface, and a collection of previews for an application may be used to aggregate and display cache pages related to the application.

It should be noted that, in the present embodiment, when collections of previews for every running application are displayed in the multi-task management interface, every collection of previews may be displayed horizontally in a single row in the multi-task management interface according to a third predetermined order. Generally, a display screen may only present a limited number of collections of previews, and the user may trigger the presentation of more collections of previews by inputting a predetermined gesture if the user wants to acquire more collection of previews.

However, examples in the present embodiment do not limit the way the multi-task management interface displays collections of previews for every running application. In practical applications, when every collection of previews is displayed in the multi-task management interface, every collection of previews for the applications may also be displayed horizontally in dual rows according to the third predetermined order. The third predetermined order may be the order the applications being opened recently, or the order of the open frequency of applications (from high to low).

The first controlling module 405 may be configured to acquire a selected cache page, control an application corresponding to the selected cache page to run in the foreground, and control the application to initially display the selected cache page.

Alternatively, the displaying module 404 may comprise: a first presenting sub-module 404a and a second presenting sub-module 404b.

The first presenting sub-module 404a may be configured to present, for a collection of previews for each application, cache pages related to the application in a superposition manner according to a first predetermined order, wherein at least part of the area of any cache page in each collection of previews is not covered by other cache pages in the collection of previews.

Generally, the first predetermined order may be the sequential order that the cache pages being opened. Preferably, the first predetermined order may also be the order of the frequency that the cache pages being opened (from high to low). This is not limited in the present embodiment, which may be determined according to the actual situation.

The second presenting sub-module 404b may be configured to present, for a collection of previews for each application, a predetermined number of cache pages related to the application in a superposition manner according to a second predetermined order, wherein at least part of the area of any cache page in each collection of previews is not covered by other cache pages in the collection of previews.

Generally, the second predetermined order may be the sequential order that the cache pages being opened. Preferably, the second predetermined order may also be the order of the frequency that the cache pages being opened (from high to low). This is not limited in the present embodiment, which may be determined according to the actual situation. The predetermined number of cache pages displayed in the collection of previews may be set by the user, or may be system default.

Alternatively, this device for multi-task management may also comprise:
A display module 406 that may be configured to present each cache page in one collection of previews in an extension way when detecting that the collection of previews is selected.

There may be many ways for the presenting in extension ways. For example, cache pages in the collection of previews may be tiled in the preview interface for presenting; moreover, the cache pages presented in a superposition manner may be stretched vertically for presenting, so as to reduce the covered area of cache pages that are not on the top layer.

Alternatively, this device for multi-task management may also comprise:
A second receiving module that may be configured to receive a switch signal triggered for a designated collection of previews, and the switch signal may be used to indicate to switch a cache page presented on a top layer.

The switch signal discussed here may generally be gestures inputted by the user on the touch screen of the electronic equipment. For example, the switch signal may be an up slide operation gesture, or a down slide operation gesture.

A second controlling module that may be configured to control a first cache page presented on the top layer of the designated collection of previews to switch to be presented on a bottom layer of the designated collection of previews, switch a second cache page behind the first cache page to be presented on the top layer of the designated collection of previews in order.

The first cache page discussed here may generally be the cache page presented on the top layer of the collection of previews, and the second cache page may be the cache page presented on the next layer of the first cache page (i.e., the second layer of the collection of previews), and so on.

Alternatively, the first controlling module 405 may also be configured to control an application corresponding to the selected cache page to run in the foreground if the selected cache page is on a top layer of the collection of previews in which the selected cache page is located.

Alternatively, this device for multi-task management may also comprise:
A third controlling module 407 that may be configured to, after acquiring a selected cache page, control the selected cache page to be presented on a top layer of a collection of previews in which the selected cache page is located if the selected cache page is not on the top layer of the collection of previews in which the selected cache page is located.

Alternatively, this device for multi-task management may also comprise:
A caching module 408 that may be configured to, after an application is started, cache pages that the application opens during this startup, and consider the pages as cache pages related to the application.

Alternatively, this device for multi-task management may also comprise:
A clearing module 409 that may be configured to clear cached cache pages related to an application when the application stops running.

As above described, a device for multi-task management is provided in embodiments of the present disclosure, by receiving an operation signal for triggering the display of a multi-task management interface, for each of the running applications, cached cache pages related to the application may be acquired. Collections of previews for the running applications may be displayed in the multi-task management interface, and a collection of previews for an application may be used to aggregate and display cache pages related to the application. A selected cache page may be acquired, an application corresponding to the selected cache page may be controlled to run in the foreground, and the application may be controlled to initially display the selected cache page. As a user may select a cache page from collections of previews provided in a displayed multi-task management interface by inputting a predetermined operation signal for triggering the multi-task management interface, and the electronic equipment may control an application corresponding to the selected cache page to run in the foreground and control the application to initially display the selected cache page, operations for switching to a target page of the application may be simplified, the technical problem that operations for switching to a target page of the application in related technology are complex may be solved and the purpose of simplifying operations for switching to a target page of the application may be achieved.

Moreover, by receiving a switch signal triggered for a designated collection of previews, the switch signal may be used to indicate to switch a cache page presented on a top layer; a first cache page presented on the top layer of the designated collection of previews may be controlled to switch to be presented on a bottom layer of the designated collection of previews, a second cache page behind the first cache page may be switched to be presented on the top layer of the designated collection of previews in order; to enable the user to be able to switch the cache page presented on the top layer of the collection of previews, and browse contents of every cache page in the collection of previews.

Moreover, after acquiring a selected cache page, by controlling the selected cache page to be presented on a top layer of a collection of previews in which the selected cache page locates if the selected cache page is not on the top layer of the collection of previews in which the selected cache page locates, to enable the user to be able to switch the cache page presented on the top layer of the collection of previews, that is, the user may switch other caches page that are not on the top layer of the collection of previews to be presented on the top layer of the collection of previews.

Moreover, after an application is started, by caching pages that the application opens during this startup, and the pages may be considered as cache pages related to the application. By, after an application is started, caching pages that the application opens during this startup, these pages may be considered as cache pages related to the application, such that cache pages related to every running application may be acquired directly when the multi-task management interface is evoked subsequently to display.

Moreover, by clearing cached cache pages related to an application when the application stops, the system resources may be released from the cache pages.

Moreover, presenting every cache page in one collection of previews in an extension way when detecting that the collection of previews is selected, to enable the user to be able to browse every cache page contained in the collection of previews.

A device for multi-task management, which may be able to implement the method for multi-task management provided in the present disclosure, is provided in an exemplary embodiment of the present disclosure. This device for multi-task management may comprise: a processor, a memory for storing processor-executable instructions;

wherein the processor is configured to:
receive an operation signal for triggering the display of a multi-task management interface;
acquire every running application on the electronic equipment;
acquire, for each of the running applications, cached cache pages related to the application;
display collections of previews for the running applications in the multi-task management interface, a collection of previews for an application may be used to aggregate and display cache pages related to the application; and
acquire a selected cache page, control an application corresponding to the selected cache page to run in the foreground, and control the application to initially display the selected cache page.

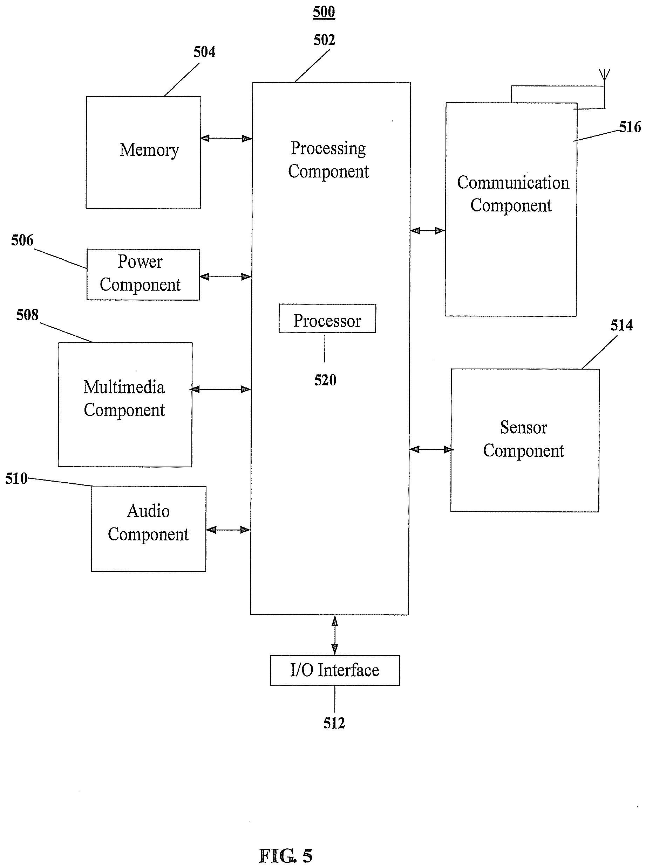

Fig. 5 is a block diagram of a device for managing multi-task illustrated according to an exemplary embodiment. For example, the device 500 may be mobile phone, computer, digital broadcast terminal, messaging device, game console, tablet device, medical device, fitness equipment, personal digital assistant, etc.

Referring to Fig. 5, the device 500 may comprise one or more of the following components: a processing component 502, a memory 504, a power component 506, a multimedia component 508, an audio component 510, an input/output (I/O) interface 512, a sensor component 514, and a communication component 516.

The processing component 502 typically controls overall operation of the device 500, such as the operations associated with display, telephone call, data communications, camera operations and recording operations. The processing element 502 may comprise one or more processors 520 to execute instructions to perform all or part of the steps in the above described methods. Additionally, the processing component 502 may comprise one or more modules which facilitate the interaction between the processing component 502 and other components. For instance, the processing component 502 may comprise a multimedia module to facilitate the interaction between the multimedia component 508 and the processing component 502.

The memory 504 is configured to store various types of data to support the operation of the device 500. Examples of such data comprise instructions for any applications or methods operated on the device 500, contacts data, phonebook data, messages, images, videos, etc. The memory 504 may be implemented using any type of volatile or non-volatile memory devices or a combination thereof, such as a static random access memory (SRAM), an electrically erasable programmable read only memory (EEPROM), an erasable programmable read only memory (EPROM), a programmable read-only memory (PROM), a read-only memory (ROM), a magnetic memory, a flash memory, a magnetic disk or optical disk.

The power component 506 provides power to various components of the device 500. The power component 506 may comprise a power management system, one or more power sources, and any other components associated with the generation, management, and distribution of power in the device 500.

The multimedia component 508 comprises a screen providing an output interface between the device 500 and the user. In some embodiments, the screen may comprise a liquid crystal display (LCD) and a touch panel (TP). If the screen comprises the touch panel, the screen may be implemented as a touch screen to receive input signal from the users. The touch panel comprises one or more touch sensors to sense touches, swipes and gestures on the touch panel. The touch sensor may not only sense a boundary of a touch or swipe action, but also detect the duration and pressure associated with the touch or swipe operation. In some embodiments, the multimedia component 508 comprises one front camera and/or rear camera. When the device 500 is in an operation mode, such as a shooting mode or a video mode, the front camera and/or rear camera may receive external multimedia data. Every front camera and rear camera may be a fixed optical lens system or have focal length and optical zoom capability.

The audio component 510 is configured to output and/or input audio signals. For example, the audio component 510 comprises a microphone (MIC) configured to receive an external audio signal when the device 500 is in an operation mode, such as a call mode, a recording mode and a voice recognition mode. The received audio signal may be further stored in the memory 504 or transmitted via the communication component 516. In some embodiments, the audio component 510 further comprises a speaker to output audio signals.

The I/O interface 512 provides an interface between the processing component 502 and peripheral interface modules, such as a keyboard, a click wheel, buttons, and the like. The buttons may comprise, but are not limited to: a home button, a volume button, a starting button, and a locking button.

The sensor component 514 comprises one or more sensors to provide various aspects of status assessments for the device 500. For instance, the sensor component 514 may detect an open/closed status of the device 500, relative positioning of components, such as the display and the keypad of the device 500, the sensor component 514 may also detect a position change of the device 500 or a component thereof, a presence or absence of a contact between the user and the device 500, an orientation or acceleration/deceleration of the device 500, and a temperature change of the device 500. The sensor component 514 may comprise a proximity sensor configured to detect the presence of nearby objects without any physical contact. The sensor component 514 may further comprise a light sensor, such as a CMOS or CCD image sensor, for use in imaging applications. In some embodiments, the sensor component 514 may further comprise an accelerometer sensor, a gyroscope sensor, a magnetic sensor, a pressure sensor, a microwave sensor, or a temperature sensor.

The communication component 516 is configured to facilitate the device 500 to communication, wired or wirelessly, with other devices. The device 500 can access a communication standard based wireless network, such as WiFi, 2G, or 3G, or a combination thereof. In an exemplary embodiment, the communication component 516 receives a broadcast signal from an external broadcast management system or broadcasts the associated information via a broadcast channel. In an exemplary embodiment, the communication component 516 further comprises a near field communication (NFC) module to facilitate short-range communication. For example, the NFC module may be implemented based on radio frequency identification (RFID) technique, infrared data association (IrDA) technique, ultra-wideband (UWB) technique, Bluetooth (BT) technique, and other techniques.

In an exemplary embodiment, the device 500 may be implemented with one or more application specific integrated circuits (ASIC), digital signal processors (DSP), digital signal processing devices (DSPD), programmable logic devices (PLD), field programmable gate arrays (FPGA), controllers, micro-controllers, microprocessors, or other electronic components, for performing the above described methods.

In an exemplary embodiment, there is also provided a non-transitory computer-readable storage medium including instructions, such as the memory 504 including instructions, the instructions can be executed by the processor 520 of the device 500 to implement the above described methods. For example, the non-transitory computer-readable storage medium may be a ROM, a random access memory (RAM), a CD-ROM, a magnetic tape, a floppy disc, and an optical data storage device, etc.

A non-transitory computer-readable storage medium, when the instruction in the storage medium is executed by the processor of the device 500, enable the device 500 performs the methods shown in Fig. 1, Fig. 2A, Fig. 2G.

Other embodiments of the present disclosure will be apparent to those skilled in the art from consideration of the specification and practice of the disclosure disclosed herein. The present disclosure is intended to cover any variations, uses or adaptations of the present disclosure, and these variations, uses and adaptations follow the general principles of the present disclosure and comprise common general knowledge and conventional techniques of the art which are not disclosed herein. The specification and the embodiments are merely considered as exemplary, and the true scope the present disclosure is indicated by the following claims.

It should be appreciated that the present disclosure is not limited to the exact structures that have been described above and illustrated in the accompanying drawings, and that various modifications and changes can be made without departing from the scope thereof. It is intended that the scope of the present disclosure is only limited by the appended claims.

## Claims

1. A method applied in an electronic equipment for multi-task management, **characterized in that** the method comprises:
receiving (101) an operation signal for triggering the display of a multi-task management interface;
acquiring (102) every running application on the electronic equipment;
caching (103), for each of the running applications, cache pages related to the application, wherein cache pages are pages opened by the specific application;
displaying (104) collections of previews for the running applications in the multi-task management interface, a collection of previews for an application being used to aggregate and display cache pages related to the application; and
acquiring (105) a selected cache page, controlling an application corresponding to the selected cache page to run in the foreground, and controlling the application to initially display the selected cache page,
wherein the displaying (104) collections of previews for the running applications in the multi-task management interface comprises:
presenting, for a collection of previews for each application, cache pages related to the application in a superposition manner according to a first predetermined order; or
presenting, for a collection of previews for each application, a predetermined number of cache pages related to the application in a superposition manner according to a second predetermined order,
wherein the first predetermined order or the second predetermined order is the sequential order that the cache pages being opened or the order of the frequency that the cache pages being opened.

2. The method of claim 1, wherein at least part of the area of any cache page in each collection of previews is not covered by other cache pages in the collection of previews.

3. The method of claim 1, further comprising:
presenting each cache page in one collection of previews in an extension way when detecting that the collection of previews is selected; and
after acquiring a selected cache page, controlling the selected cache page to be presented on a top layer of a collection of previews in which the selected cache page locates if the selected cache page is not on the top layer of the collection of previews in which the selected cache page locates.

4. The method of claim 2, further comprising:
receiving (205a) a switch signal triggered for a designated collection of previews, the switch signal being used to indicate to switch a cache page presented on a top layer;
controlling (205b) a first cache page presented on the top layer of the designated collection of previews to switch to be presented on a bottom layer of the designated collection of previews, switching a second cache page behind the first cache page to be presented on the top layer of the designated collection of previews in order.

5. The method of claim 1, wherein the controlling an application corresponding to the selected cache page to run in the foreground comprises:
controlling an application corresponding to the selected cache page to run in the foreground if the selected cache page is on a top layer of the collection of previews in which the selected cache page locates.

6. The method of any of claims 1 to 5, further comprising:
after an application is started, caching pages that the application opens during this startup, and considering the pages as cache pages related to the application.

7. The method of claim 6, further comprising:
clearing cached cache pages related to an application when the application stops running.

8. A device applied in an electronic equipment for multi-task management, **characterized in that** the device comprises:
a first receiving module (310) configured to receive an operation signal for triggering the display of a multi-task management interface;
a first acquiring module (320) configured to acquire every running application on the electronic equipment;
a second acquiring module (330) configured to cache, for each of the running applications, cache pages related to the application, wherein cache pages are pages opened by the specific application;
a displaying module (340, 404) configured to display collections of previews for the running applications in the multi-task management interface, a collection of previews for an application being used to aggregate and display cache pages related to the application; and
a first controlling module (350) configured to acquire a selected cache page, control an application corresponding to the selected cache page to run in the foreground, and control the application to initially display the selected cache page,
wherein the displaying module (340, 404) comprises:
a first presenting sub-module (404a) configured to present, for a collection of previews for each application, cache pages related to the application in a superposition manner according to a first predetermined order; or
a second presenting sub-module (404b) configured to present, for a collection of previews for each application, a predetermined number of cache pages related to the application in a superposition manner according to a second predetermined order;
wherein the first predetermined order or the second predetermined order is the sequential order that the cache pages being opened or the order of the frequency that the cache pages being opened.

9. The device of claim 8, wherein at least part of the area of any cache page in each collection of previews is not covered by other cache pages in the collection of previews.

10. The device of claim 8, further comprising:
a presenting module (406) configured to present each cache page in one collection of previews in an extension way when detecting that the collection of previews is selected; and
a third controlling module (407) configured to, after acquiring a selected cache page, control the selected cache page to be presented on a top layer of a collection of previews in which the selected cache page locates if the selected cache page is not on the top layer of the collection of previews in which the selected cache page locates.

11. The device of claim 9, further comprising:
a second receiving module configured to receive a switch signal triggered for a designated collection of previews, the switch signal being used to indicate to switch a cache page presented on a top layer;
a second controlling module configured to control a first cache page presented on the top layer of the designated collection of previews to switch to be presented on a bottom layer of the designated collection of previews, switch a second cache page behind the first cache page to be presented on the top layer of the designated collection of previews in order.

12. The device of claim 8, wherein the first controlling module (405) is further configured to control an application corresponding to the selected cache page to run in the foreground if the selected cache page is on a top layer of the collection of previews in which the selected cache page locates.

13. The device of any of claims 8 to 12, further comprising:
a caching module (408) configured to, after an application is started, cache pages that the application opens during this startup, and consider the pages as cache pages related to the application.

14. The device of claim 13, further comprising:
a clearing module (409) configured to clear cached cache pages related to an application when the application stops running.

15. The device of claim 8, further comprising:
a processor; and
a memory for storing processor-executable instructions;
wherein the processor comprises the first receiving module (310), the first acquiring module (320), the second acquiring module (330), the displaying module (340, 404) and the first controlling module (350).

## Patentansprüche

1. Verfahren, das in einer elektronischen Einrichtung zur Verwaltung mehrerer Anwendungen angewendet wird, **dadurch gekennzeichnet, dass** das Verfahren umfasst:
Empfangen (101) eines Operationssignals zum Auslösen der Anzeige einer Mehrere-Anwendungen-Verwaltung-Schnittstelle;
Erfassen (102) jeder laufenden Anwendung auf der elektronischen Einrichtung;
Cachen (103), für jede der laufenden Anwendungen, von Cacheseiten, die sich auf die Anwendung beziehen, wobei Cacheseiten Seiten sind, die von der spezifischen Anwendung geöffnet werden;
Anzeigen (104) von Zusammenstellungen von Vorschauen für die laufenden Anwendungen in der Mehrere-Anwendungen-Verwaltung-Schnittstelle, wobei eine Zusammenstellung von Vorschauen für eine Anwendung zum Aggregieren und Anzeigen von Cacheseiten, die sich auf die Anwendung beziehen, verwendet wird; und
Erfassen (105) einer ausgewählten Cacheseite, Steuern einer Anwendung, die der ausgewählten Cacheseite entspricht, derart, dass sie im Vordergrund läuft, und Steuern der Anwendung derart, dass sie anfangs die ausgewählte Cacheseite anzeigt,
wobei das Anzeigen (104) von Zusammenstellungen von Vorschauen für die laufenden Anwendungen in der Mehrere-Anwendungen-Verwaltung-Schnittstelle umfasst:
Darstellen, für eine Zusammenstellung von Vorschauen für jede Anwendung, von Cacheseiten, die sich auf die Anwendung beziehen, in einer überlagerten Form gemäß einer ersten vorbestimmten Ordnung; oder
Darstellen, für eine Zusammenstellung von Vorschauen für jede Anwendung, einer vorbestimmten Anzahl von Cacheseiten, die sich auf die Anwendung beziehen, in einer überlagerten Form gemäß einer zweiten vorbestimmten Ordnung,
wobei die erste vorbestimmte Ordnung oder die zweite vorbestimmte Ordnung die sequenzielle Ordnung ist, in der die Cacheseiten geöffnet werden, oder die Ordnung der Häufigkeit ist, mit der die Cacheseiten geöffnet werden.

2. Verfahren nach Anspruch 1, bei dem zumindest ein Teil des Bereichs jeder Cacheseite in jeder Zusammenstellung von Vorschauen nicht von anderen Cacheseiten in der Zusammenstellung von Cacheseiten überdeckt wird.

3. Verfahren nach Anspruch 1, das ferner umfasst:
Darstellen jeder Cacheseite in nur einer Zusammenstellung von Vorschauen in einer erweiterten Form, wenn detektiert wird, dass die Zusammenstellung von Vorschauen ausgewählt ist; und
nach dem Erfassen einer ausgewählten Cacheseite Steuern der ausgewählten Cacheseite derart, dass sie auf einer oberen Schicht einer Zusammenstellung von Vorschauen, in der sich die ausgewählte Cacheseite befindet, dargestellt wird, wenn die ausgewählte Cacheseite nicht in der oberen Schicht der Zusammenstellung von Vorschauen ist, in der sich die ausgewählte Cacheseite befindet.

4. Verfahren nach Anspruch 2, das ferner umfasst:
Empfangen (205a) eines Schaltsignals, das für eine bezeichnete Zusammenstellung von Vorschauen ausgelöst wird, wobei das Schaltsignal zum Angeben verwendet wird, dass eine Cacheseite derart geschaltet wird, dass sie auf einer oberen Schicht dargestellt wird;
Steuern (205b) einer ersten Cacheseite, die auf der oberen Schicht der bezeichneten Zusammenstellung von Vorschauen dargestellt ist, derart, dass sie so geschaltet wird, dass sie auf einer unteren Schicht der bezeichneten Zusammenstellung von Vorschauen dargestellt wird, eine zweite Cacheseite hinter der ersten Cacheseite so geschaltet wird, dass sie auf der oberen Schicht der bezeichneten Zusammenstellung von Vorschauen dargestellt wird.

5. Verfahren nach Anspruch 1, bei der das Steuern einer Anwendung, die der ausgewählten Cacheseite entspricht, derart, dass sie im Vordergrund läuft, umfasst:
Steuern einer Anwendung, die der ausgewählten Cacheseite entspricht, derart, dass sie im Vordergrund läuft, wenn die ausgewählte Cacheseite auf einer oberen Schicht der Zusammenstellung von Vorschauen ist, in der sich die ausgewählte Cacheseite befindet.

6. Verfahren nach einem der Ansprüche 1 bis 5, das ferner umfasst:
nach dem Starten einer Anwendung Cachen von Seiten, die die Anwendung während dieses Starts öffnet, und Erachten der Seiten als Cacheseiten, die sich auf die Anwendung beziehen.

7. Verfahren nach Anspruch 6, das ferner umfasst:
Entfernen von gecachten Cacheseiten, die sich auf eine Anwendung beziehen, wenn die Anwendung nicht mehr läuft.

8. Vorrichtung, die in einer elektronischen Einrichtung zur Verwaltung von mehreren Anwendungen verwendet wird, **dadurch gekennzeichnet, dass** die Vorrichtung umfasst:
ein erstes Empfangsmodul (310), das derart ausgeführt ist, dass es ein Operationssignal zum Auslösen der Anzeige einer Mehrere-Anwendungen-Verwaltung-Schnittstelle empfängt;
ein erstes Erfassungsmodul (320), das derart ausgeführt ist, dass es jede laufende Anwendung auf der elektronischen Einrichtung erfasst;
ein zweites Erfassungsmodul (330), das derart ausgeführt ist, dass es für jede der laufenden Anwendungen Cacheseiten cacht, die sich auf die Anwendung beziehen, wobei die Cacheseiten Seiten sind, die von der spezifischen Anwendung geöffnet werden;
ein Anzeigemodul (340, 404), das derart ausgeführt ist, dass es Zusammenstellungen von Vorschauen für die laufenden Anwendungen in der Mehrere-Anwendungen-Verwaltung-Schnittstelle anzeigt, wobei eine Zusammenstellung von Vorschauen für eine Anwendung zum Aggregieren und Anzeigen von Cacheseiten, die sich auf die Anwendung beziehen, verwendet wird; und
ein erstes Steuermodul (350), das derart ausgeführt ist, dass es eine ausgewählte Cacheseite erfasst, eine Anwendung, die der ausgewählten Cacheseite entspricht, derart steuert, dass sie im Vordergrund läuft, und die Anwendung derart steuert, dass sie anfangs die ausgewählte Cacheseite anzeigt,
wobei das Anzeigemodul (340, 404) umfasst:
ein erstes Darstellungs-Submodul (404a), das derart ausgeführt ist, dass es für eine Zusammenstellung von Vorschauen für jede Anwendung Cacheseiten, die sich auf die Anwendung beziehen, in einer überlagerten Form gemäß einer ersten vorbestimmten Ordnung darstellt; oder
ein zweites Darstellungs-Submodul (404b), das derart ausgeführt ist, dass es für eine Zusammenstellung von Vorschauen für jede Anwendung eine vorbestimmte Anzahl von Cacheseiten, die sich auf die Anwendung beziehen, in einer überlagerten Form gemäß einer zweiten vorbestimmten Ordnung darstellt;
wobei die erste vorbestimmte Ordnung oder die zweite vorbestimmte Ordnung die sequenzielle Ordnung ist, in der die Cacheseiten geöffnet werden, oder die Ordnung der Häufigkeit ist, mit der die Cacheseiten geöffnet werden.

9. Vorrichtung nach Anspruch 8, bei der zumindest ein Teil des Bereichs jeder Cacheseite in jeder Zusammenstellung von Vorschauen nicht von anderen Cacheseiten in der Zusammenstellung von Cacheseiten bedeckt wird.

10. Vorrichtung nach Anspruch 8, die ferner umfasst:
ein Darstellungsmodul (406), das derart ausgeführt ist, dass es jede Cacheseite in nur einer Zusammenstellung von Vorschauen in einer erweiterten Form darstellt, wenn detektiert wird, dass die Zusammenstellung von Vorschauen ausgewählt ist; und
ein drittes Steuermodul (407), das derart ausgeführt ist, dass es nach dem Erfassen einer ausgewählten Cacheseite die ausgewählte Cacheseite derart steuert, dass sie auf einer oberen Schicht einer Zusammenstellung von Vorschauen, in der sich die ausgewählte Cacheseite befindet, dargestellt wird, wenn die ausgewählte Cacheseite nicht in der oberen Schicht der Zusammenstellung von Vorschauen ist, in der sich die ausgewählte Cacheseite befindet.

11. Vorrichtung nach Anspruch 9, die ferner umfasst:
ein zweites Empfangsmodul, das derart ausgeführt ist, dass es ein Schaltsignal, das für eine bezeichnete Zusammenstellung von Vorschauen ausgelöst wird, empfängt, wobei das Schaltsignal zum Angeben verwendet wird, dass eine Cacheseite derart geschaltet wird, dass sie auf einer oberen Schicht dargestellt wird;
ein zweites Steuermodul, das derart ausgeführt ist, dass es eine erste Cacheseite, die auf der oberen Schicht der bezeichneten Zusammenstellung von Vorschauen dargestellt ist, derart steuert, dass sie so geschaltet wird, dass sie auf einer unteren Schicht der bezeichneten Zusammenstellung von Vorschauen dargestellt wird, eine zweite Cacheseite hinter der ersten Cacheseite so geschaltet wird, dass sie auf der oberen Schicht der bezeichneten Zusammenstellung von Vorschauen dargestellt wird.

12. Vorrichtung nach Anspruch 8, bei der das erste Steuermodul (405) ferner derart ausgeführt ist, dass es eine Anwendung, die der ausgewählten Cacheseite entspricht, derart steuert, dass sie im Vordergrund läuft, wenn die ausgewählte Cacheseite auf einer oberen Schicht der Zusammenstellung von Vorschauen ist, in der sich die ausgewählte Cacheseite befindet.

13. Vorrichtung nach einem der Ansprüche 8 bis 12, die ferner umfasst:
ein Cachemodul (408), das derart ausgeführt ist, dass es nach dem Starten einer Anwendung Seiten cacht, die die Anwendung während dieses Starts öffnet, und die Seiten als Cacheseiten erachtet, die sich auf die Anwendung beziehen.

14. Vorrichtung nach Anspruch 13, die ferner umfasst:
ein Entfernungsmodul (409), das derart ausgeführt ist, dass es gecachte Cacheseiten, die sich auf eine Anwendung beziehen, entfernt, wenn die Anwendung nicht mehr läuft.

15. Vorrichtung nach Anspruch 8, die ferner umfasst:
einen Prozessor; und
einen Speicher zum Speichern von durch den Prozessor ausführbaren Anweisungen;
wobei der Prozessor das erste Empfangsmodul (310), das erste Erfassungsmodul (320), das zweite Erfassungsmodul (330), das Anzeigemodul (340, 404) und das erste Steuermodul (350) umfasst.

## Revendications

1. Procédé appliqué dans un équipement électronique de gestion multitâche, **caractérisé par le fait que** le procédé comprend le fait de :
recevoir (101) un signal de fonctionnement pour déclencher l'affichage d'une interface de gestion multitâche ;
acquérir (102) chaque application en cours d'exécution sur l'équipement électronique ;
mettre en cache (103), pour chacune des applications en cours d'exécution, les pages de cache relatives à l'application, où les pages de cache sont les pages ouvertes par l'application spécifique ;
afficher (104) les collections de prévisualisations pour les applications en cours d'exécution dans l'interface de gestion multitâche, une collection de prévisualisations pour une application étant utilisée pour agréger et afficher des pages de cache relatives à l'application ; et
acquérir (105) une page de cache sélectionnée, commander une application correspondant à la page de cache sélectionnée de manière à s'exécuter en premier plan, et commander l'application de manière à afficher initialement la page de cache sélectionnée,
dans lequel l'affichage (104) de collections de prévisualisations pour les applications en cours d'exécution dans l'interface de gestion multitâche comprend le fait de :
présenter, pour une collection de prévisualisations pour chaque application, les pages de cache relatives à l'application de manière superposée selon un premier ordre prédéterminé ; ou
présenter, pour une collection de prévisualisations pour chaque application, un nombre prédéterminé de pages de cache relatives à l'application de manière superposée selon un deuxième ordre prédéterminé,
dans lequel le premier ordre prédéterminé ou le deuxième ordre prédéterminé est l'ordre séquentiel d'ouverture des pages de cache ou l'ordre de la fréquence d'ouverture des pages de cache.

2. Procédé selon la revendication 1, dans lequel au moins une partie de la surface de toute page de cache dans chaque collection de prévisualisations n'est pas recouverte par d'autres pages de cache dans la collection de prévisualisations.

3. Procédé selon la revendication 1, comprenant par ailleurs le fait de :
présenter chaque page de cache dans une collection de prévisualisations de manière étendue lorsqu'il est détecté que la collection de prévisualisations est sélectionnée ; et
après acquisition d'une page de cache sélectionnée, commander la page de cache sélectionnée de manière à être présentée sur une couche supérieure d'une collection de prévisualisations dans laquelle se trouve la page de cache sélectionnée si la page de cache sélectionnée ne se trouve pas sur la couche supérieure de la collection de prévisualisations dans laquelle se trouve la page de cache sélectionnée.

4. Procédé selon la revendication 2, comprenant par ailleurs le fait de :
recevoir (205a) un signal de commutation déclenché pour une collection de prévisualisations désignée, le signal de commutation étant utilisé pour indiquer de commuter une page de cache présentée sur une couche supérieure ;
commander (205b) une première page de cache présentée sur la couche supérieure de la collection de prévisualisations désignée pour qu'elle commute de manière à être présentée sur une couche inférieure de la collection de prévisualisations désignée, commuter une deuxième page de cache derrière la première page de cache à présenter sur le couche supérieure de la collection de prévisualisations désignée dans l'ordre.

5. Procédé selon la revendication 1, dans lequel la commande d'une application correspondant à la page de cache sélectionnée de manière à s'exécuter en premier plan comprend le fait de :
commander une application correspondant à la page de cache sélectionnée de manière à s'exécuter en premier plan si la page de cache sélectionnée se trouve sur une couche supérieure de la collection de prévisualisations dans laquelle se situe la page de cache sélectionnée.

6. Procédé selon l'une quelconque des revendications 1 à 5, comprenant par ailleurs le fait de :
après le démarrage d'une application, mettre en cache les pages que l'application ouvre pendant ce démarrage, et considérer les pages comme pages de cache relatives à l'application.

7. Procédé selon la revendication 6, comprenant par ailleurs le fait de :
effacer les pages de cache mises en cache relatives à une application lorsque l'application cesse de s'exécuter.

8. Dispositif appliqué dans un équipement électronique de gestion multitâche, **caractérisé par le fait qu'**il comprend :
un premier module de réception (310) configuré pour recevoir un signal de fonctionnement pour déclencher l'affichage d'une interface de gestion multitâche ;
un premier module d'acquisition (320) configuré pour acquérir chaque application en cours d'exécution sur l'équipement électronique ;
un deuxième module d'acquisition (330) configuré pour mettre en cache, pour chacune des applications en cours d'exécution, les pages de cache relatives à l'application, où les pages de cache sont les pages ouvertes par l'application spécifique ;
un module d'affichage (340, 404) configuré pour afficher des collections de prévisualisations pour les applications en cours d'exécution dans l'interface de gestion multitâche, une collection de prévisualisations pour une application étant utilisée pour agréger et afficher les pages de cache relatives à l'application ; et
un premier module de commande (350) configuré pour acquérir une page de cache sélectionnée, pour commander une application correspondant à la page de cache sélectionnée de manière à s'exécuter en premier plan, et pour commander l'application de manière à afficher initialement la page de cache sélectionnée,
dans lequel le module d'affichage (340, 404) comprend :
un premier sous-module de présentation (404a) configuré pour présenter, pour une collection de prévisualisations pour chaque application, les pages de cache relatives à l'application de manière superposée selon un premier ordre prédéterminé ; ou
un deuxième sous-module de présentation (404b) configuré pour présenter, pour une collection de prévisualisations pour chaque application, un nombre prédéterminé de pages de cache relatives à l'application de manière superposée selon un deuxième ordre prédéterminé ;
dans lequel le premier ordre prédéterminé ou le deuxième ordre prédéterminé est l'ordre séquentiel d'ouverture des pages de cache ou l'ordre de la fréquence d'ouverture des pages de cache.

9. Dispositif selon la revendication 8, dans lequel au moins une partie de la surface de toute page de cache dans chaque collection de prévisualisations n'est pas recouverte par d'autres pages de cache dans la collection de prévisualisations.

10. Dispositif selon la revendication 8, comprenant par ailleurs :
un module de présentation (406) configuré pour présenter chaque page de cache dans une collection de prévisualisations de manière étendue lorsqu'il est détecté que la collection de prévisualisations est sélectionnée ; et
un troisième module de commande (407) configuré pour commander, après l'acquisition d'une page de cache sélectionnée, la page de cache sélectionnée de manière à être présentée sur la couche supérieure d'une collection de prévisualisations dans laquelle se trouve la page de cache sélectionnée si la page de cache sélectionnée ne se trouve pas sur la couche supérieure de la collection de prévisualisations dans laquelle se trouve la page de cache sélectionnée.

11. Dispositif selon la revendication 9, comprenant par ailleurs :
un deuxième module de réception configuré pour recevoir un signal de commutation déclenché pour une collection de prévisualisations désignée, le signal de commutation étant utilisé pour indiquer de commuter une page de cache présentée sur une couche supérieure ;
un deuxième module de contrôle configuré pour commander une première page de cache présentée sur la couche supérieure de la collection de prévisualisations désignée pour qu'elle commute de manière à être présentée sur une couche inférieure de la collection de prévisualisations désignée, pour commuter une deuxième page de cache située derrière la première page de cache présentée sur la couche supérieure de la collection de prévisualisations désignée dans l'ordre.

12. Dispositif selon la revendication 8, dans lequel le premier module de commande (405) est par ailleurs configuré pour commander une application correspondant à la page de cache sélectionnée de manière à s'exécuter en premier plan si la page de cache sélectionnée se trouve sur une couche supérieure de la collection de prévisualisations dans laquelle se trouve la page de cache sélectionnée.

13. Dispositif selon l'une quelconque des revendications 8 à 12, comprenant par ailleurs:
un module de mise en cache (408) configuré pour mettre en cache, après le démarrage d'une application, les pages que l'application ouvre au cours de ce démarrage et considérer les pages comme pages de cache relatives à l'application.

14. Dispositif selon la revendication 13, comprenant par ailleurs:
un module d'effacement (409) configuré pour effacer les pages de cache mises en cache relatives à une application lorsque l'application cesse de s'exécuter.

15. Dispositif selon la revendication 8, comprenant par ailleurs :
un processeur; et
une mémoire destinée à mémoriser des instructions exécutables par un processeur;
dans lequel le processeur comprend le premier module de réception (310), le premier module d'acquisition (320), le deuxième module d'acquisition (330), le module d'affichage (340, 404) et le premier module de commande (350).
